# EUROPÄISCHE PATENTSCHRIFT

(11) **EP 0 716 901 B1**
(45) Veröffentlichungstag und Bekanntmachung des Hinweises auf die Patenterteilung: **25.08.1999**
(21) Anmeldenummer: 95117293.1
(22) Anmeldetag: 03.11.1995
(51) Int. Cl.: B23Q 11/08, F15B 15/08

(54) **Führungseinrichtung**
Guiding device
Dispositif de guidage

(30) Priorität: 17.12.1994 DE 4445132
(43) Veröffentlichungstag der Anmeldung: 19.06.1996
(73) Patentinhaber: Neff Antriebstechnik Automation GmbH, D-71111 Waldenbuch (DE)
(72) Erfinder: Schön, Uwe, D-71101 Schönaich (DE)
(74) Vertreter: Rüger, Rudolf, Dr.-Ing.

(56) Entgegenhaltungen:
- CH-A- 183 271
- DE-U- 9 006 043
- JP-A- 3 004 005

## Beschreibung

Sowohl Linearführungen, als auch Führungseinrichtungen, bei denen ein bewegliches Element entlang einer gekrümmten, beispielsweise kreisförmigen Bahn geführt wird, können einen oder mehrere Schlitze aufweisen, entlang derer das bewegliche Element geführt wird und die nach außen hin abzudecken sind. Das ist beispielsweise bei Linearführungen der Fall, bei denen ein Schlitten an einem Grundkörper linear verschieblich gelagert und von einer in dem Grundkörper angeordneten Antriebseinrichtung angetrieben ist. Um eine mechanische Kopplung zwischen einem beispielsweise als Antriebseinrichtung in dem Grundkörper angeordneten Zahnriemen und dem linear verfahrbaren Schlitten herzustellen, weist der Grundkörper einen Längsschlitz auf, der von einem die Antriebseinrichtung mit dem Schlitten verbindenden Steg durchgriffen ist. Zur Vermeidung des Eindringens von Schmutz, Spänen, Ölen oder dergleichen durch den Schlitz in das Innere des Grundkörpers, ist der Schlitz mittels eines flexiblen Abdeckbandes abgedeckt, das sich entlang des Schlitzes von einem seiner Enden durch einen entsprechenden in dem Steg vorgesehenen Durchführungsbereich bis zu dem anderen Ende des Grundkörpers erstreckt. Das Abdeckband ist an beiden Enden des Grundkörpers mittels einer Klemmvorrichtung gefaßt, die das Abdeckband axial unverschiebbar hält.

Wenn als Antriebseinrichtung ein fluidbetätigter Kolben vorgesehen ist, ist der Längsschlitz mit einem an diesen gehaltenen Abdichtband nach außen abgedeckt.

In vielen Fällen wird als Abdeckband oder Abdichtband ein Kunststoffband verwendet, das den Schlitz außerhalb des Schlittens abdeckt und gegebenenfalls mit entsprechenden Rasteinrichtungen an dem Schlitz gehalten ist. Im Bereich des Steges ist das Abdeckband von dem Schlitz radial nach außen abgehoben und durch den Durchführungsbereich des Steges geführt. Ein Abdichtband wird radial nach innen von dem Längsschlitz abgehoben. Der Schlitten gleitet mit seinem Durchführungsbereich an dem mit seinen Enden fest an dem Grundkörper befestigte Band, wobei es in Fahrtrichtung vor dem Schlitten von dem Schlitz abgehoben und hinter dem Schlitten an den Schlitz angelegt und mit gegebenenfalls vorhandenen Rasteinrichtungen mit dem Grundkörper verrastet wird. Bei diesem Vorgang wird insbesondere infolge der zwischen dem Band und den entsprechenden Teilen des Durchführungsbereichs des Steges vorhandenen und nie ganz auszuschließenden Reibung eine mitunter ganz erhebliche Axialkraft auf das Band ausgeübt. Außerdem kann die Reibung zur Erwärmung des betreffenden Bandes führen, insbesondere wenn der Schlitten Arbeitsspiele in schneller Folge ausführt.

Beide Einflüsse, nämlich die Erwärmung des Bandes und die entlang seiner Längserstreckung wirkende Axialkraft können zu einer temporären oder auch dauernden Längung desselben führen. Es liegt dann entweder zeitweilig oder auf Dauer nicht mehr straff an dem Schlitz an. Der Schlitten schiebt dann bei seiner Längsbewegung einen radial nach außen gebeulten, zusammengeschobenen Bandabschnitt wie eine Welle oder Wulst vor sich her. Wenn dies auftritt, ist der beabsichtigte, von dem Abdeckband zu erbringende Schutz der im Inneren des Grundkörpers liegenden Einrichtungen, beispielsweise gegen Staub, Schmutz und Öl, nicht mehr sichergestellt. Ein zusammengeschobenes Abdichtband hingegen dichtet den Längsschlitz nicht mehr sicher gegen Fluidein- und -austritt ab.

Aus der JP-A-03004005 ist ein kolbenstangenloser Zylinder mit einem längsgeschlitzten Führungsrohr und einem in dem Schlitz gelagerten Abdichtband bekannt. Das Abdichtband ist endseitig mit einer Klemmvorrichtung gehalten, die das Band unverrückbar festklemmt. Dazu dient ein mittels einer Schraube auf das Band gepresstes Klemmstück. Das Abdichband ist zwischen dem Klemmstück und einer entsprechenden Anlagefläche des Zylinders eingeklemmt.

Ändert das Dichtungsband seine Länge, muss davon ausgegangen werden, dass es auch seine Spannung ändert.

Davon ausgehend ist es Aufgabe der Erfindung, eine Führungseinrichtung zu schaffen, die auch nach längerem Einsatz zuverlässig arbeitet.

Die genannte Aufgabe wird durch eine Führungseinrichtung mit den Merkmalen des Patentanspruchs 1 gelöst.

Eine derartige Führungseinrichtung ist beispielsweise eine Linearführung, bei der ein Schlitten, der sowohl angetrieben, als auch freilaufend ausgebildet sein kann, entlang einer linearen Bahn durch einen mit entsprechenden Führungsmitteln versehenen Grundkörper geführt wird. Die Führungseinrichtung kann aber auch dazu dienen, beispielsweise bei einem Wegaufnehmer ein bewegliches, entlang einer linearen oder gekrümmten Bahn zu bewegendes Element zu führen. Auch kann es sich bei der Führungseinrichtung, sowohl wenn sie als Antriebs- oder reine Führungsvorrichtung, als auch wenn sie beispielsweise als Vorrichtung zur Führung des beweglichen Elementes eines Wegaufnehmers oder als anderweitige Führung ausgebildet ist, um eine Einrichtung handeln, bei der das bewegliche Element auf einem Bogen entlang eines gekrümmten und in Radialrichtung geöffneten Schlitzes geführt wird.

In allen genannten Fällen ist der vorhandene Schlitz mittels eines Bandes abgedeckt, das mit seinen beiden freien Enden bei den Enden der Bahn des beweglichen Elementes gehalten ist. Zur Befestigung des Bandes dient wenigstens an einem Ende eine Rücklaufsperre, die sich dadurch auszeichnet, daß das Band relativ leicht, d.h., entgegen einer gewissen, nicht allzu großen Reibung in axialer Richtung von dem beweglichen Element aus gesehen über das betreffende Ende der Bahn hinausschieben läßt, wobei ein Zurückziehen des Bandes jedoch gesperrt, d.h. unter normalen Umständen nicht möglich ist. Allgemein ausgedrückt, setzt die Rücklaufsperre der Axialbewegung des Bandes in Richtung von dem beweglichen Element weg einen wesentlich geringeren Wiederstand entgegen, als einer Axialbewegung des Bandes auf das bewegliche Element zu.

Die Ausbildung der endseitigen Befestigung des Bandes als Rücklaufsperre führt dazu, daß ein nach längerem Betrieb, durch Erwärmung, Ermüdung oder ähnliche Effekte gelängtes Band von dem sich auf die betreffende Rücklaufsperre zu bewegenden beweglichen Element durch die Rücklaufsperre geschoben und somit wieder gespannt wird. Beim Zurücklaufen kann das bewegliche Element das Band von der Rücklaufsperre nicht wieder mit zurücknehmen, so daß das Band gestrafft an dem Grundkörper gehalten ist. Die Ausbildung einer Wulst am Ende des Hubweges des beweglichen Elementes ist dadurch sicher unterbunden. Dies gilt auch dann, wenn beispielsweise infolge Schmutzablagerungen, die Reibung zwischen dem Band und dem entsprechenden Durchführungsbereich des Steges erhöht ist und sowohl eine erhöhte Axialkraft in das Band eingeleitet, als auch die Erwärmung des Bandes erhöht ist. Eine dadurch hervorgerufene, übermäßige Längendehnung des Bandes wird von der als Halteeinrichtung verwendeten Rücklaufsperre sicher ausgeglichen. Die Erfindung ist auch bei anderen, sich längenden und zu haltenden Bändern anwendbar.

Darüber hinaus hält die Rücklaufsperre das Band sowohl in seitlicher, d.h. bezogen auf die Längsausstreckung des Grundkörpers in Umfangsrichtung, als auch in radialer Richtung an dem Grundkörper. Zusätzliche Befestigungseinrichtungen zum endseitigen Halten des Bandes sind deshalb nicht erforderlich. Die Rücklaufsperre selbst bildet die Befestigungseinrichtung für das Band.

Obwohl es ausreichend sein kann, lediglich an einem Ende der Bahn bzw. des Bandes eine Rücklaufsperre anzuordnen, ist es vorteilhaft, wenn beide Enden mit jeweils einer Rücklaufsperre versehen sind. Dies führt dazu, daß der das bewegliche Element bildende Schlitten das Band bei jedem Arbeitsspiel spannt, und zwar unabhängig davon, in welcher Richtung er läuft. Ist hingegen lediglich an einem Ende der Bahn eine Rücklaufsperre vorgesehen, wird eine Spannwirkung nur bei einer auf die Rücklaufsperre zu gerichteten Bewegung erbracht.

Die Rücklaufsperre kann als mechanisches Element direkt oder mittelbar über entsprechende Zwischenstücke an dem Grundkörper befestigt sein. Wesentlich dabei ist, daß die Rücklaufsperre wirkungsmäßig zwischen dem Grundkörper und dem Band angeordnet ist, wodurch eine Axialbewegung des Bandes in Bezug auf den Grundkörper in Abhängigkeit von der Bewegungsrichtung zugelassen bzw. gesperrt wird. Der Grundkörper kann dabei sowohl einstückig als auch aus mehreren Teilen bestehend ausgebildet sein.

Es ist besonders vorteilhaft, wenn die Rücklaufsperre im wesentlichen spielfrei ausgebildet ist. Dies bedeutet, daß sich das durch die Rücklaufsperre geschobene Band in keiner Stellung um auch nur eine geringe Distanz zurückziehen läßt. Ein solches Spiel wäre hingegen vorhanden, wenn die Rücklaufsperre in der Art einer mit einem gezahnten Band zusammenwirkenden Sperrklinke ausgebildet wird. Dies ist prinzipiell möglich, jedoch ist es für die meisten Einsatzfälle vorteilhaft, eine schritt- und stufenlos arbeitende Rücklaufsperre vorzusehen. Diese ermöglicht es, selbst lediglich sehr geringe Dehnungen des Abdeckbandes aufzunehmen und damit wirkungslos zu machen.

Die Rücklaufsperre enthält wenigstens ein beweglich gelagertes, als Sperrmittel dienendes Element, dessen Wirkung von der Bewegung des Bandes gesteuert ist. Das Sperrmittel weist eine Sperrstellung und eine Freigabestellung auf, wobei eine Axialbewegung des Abdeckbandes blockiert ist, wenn das Sperrmittel in seiner Sperrstellung steht. Eine axiale Linearbewegung des Bandes ist möglich, wenn das Sperrmittel in seiner Freigabestellung steht.

Es ist sowohl möglich, das Sperrmittel so auszubilden, daß es mit dem Band rein kraftschlüssig zusammenwirkt, als auch es so auszubilden, daß es mit dem Band formschlüssig oder gemischt kraft- und formschlüssig zusammenwirkt. Eine rein kraftschlüssig arbeitende Variante ist beispielsweise durch die Verwendung eines eine Keilwirkung ausnutzenden Klemmkörpers gegeben, der durch einen an dem Abdeckband angreifenden Zug festgeklemmt wird. Solche Klemmköper können Rollen, Kugeln, Keile oder dergleichen sein. Allerdings weisen derartige Rücklaufsperren gelegentlich einen gewissen, zum Verriegeln erforderlichen Axialhub auf, der sich bezogen auf das Abdeckband in der Art eines Spieles bemerkbar macht. Es ist deshalb vorteilhaft, das Sperrmittel auf seine Sperrstellung zu vorzuspannen. Bspw. kann ein Sperrhebel vorgesehen werden, dessen freies Ende federnd vorgespannt an dem Band anliegt und der mit der Längserstreckung des Bandes einen zu dem beweglichen Element hin geöffneten spitzen Winkel einschließt. An der Gegenseite des Bandes ist ein Widerlager vorgesehen, an dem das Band anliegt und gegen das es von dem Sperrmittel angedrückt ist. Wenn Zug auf das Band ausgeübt wird, verkeilt es sich zwischen dem Widerlager und dem Sperrhebel, wodurch es festgeklemmt wird.

Eine konstruktiv einfache Lösung für den Sperrhebel ergibt sich, wenn dieser von einer Blattfeder gebildet wird, die an einem Ende bezüglich des Grundkörpers ortsfest gehalten ist und deren anderes, freies Ende mit Vorspannung federnd an dem Band anliegt. Diese Blattfeder schließt mit der Längserstreckung des Bandes einen zu dem beweglichen Element, d.h. beispielsweise dem Schlitten, hin geöffneten spitzen Winkel ein. Ist dieser spitze Winkel erheblich größer, als 45 Grad, wird das Band bei Zugbelastung stark an das Widerlager angedrückt. Ist der Winkel dagegen erheblich kleiner als 45 Grad, ist die Andrückwirkung gering, wobei sich jedoch das freie, an dem Band anliegende Ende der Blattfeder in das Band eingräbt und damit dessen Bewegung in einer Richtung blockiert. Beträgt der spitze Winkel ungefähr 45 Grad, wird sowohl eine Kerbwirkung, als auch die genannte Andrückwirkung erzielt. Zur Halte- und Sperrwirkung trägt bei dieser Variante die zwischen dem Band und den Widerlagern wirkende Haftreibung erheblich bei.

Eine besonders spielarme Ausbildung der Rücklaufsperre ergibt sich, wenn das Sperrglied eine quer zu der Längserstreckung des Bandes gerichtete Kante aufweist, die wenigstens abschnittsweise an dem Band anliegt. Eine solche Kante ist beispielsweise an dem stirnseitigen, freien Ende der Blattfeder vorgesehene scharfe Kante. Die Verrundung dieser Kante sollte möglichst gering sein, so daß sich diese unter der Federvorspannung etwas in das Abdeckband eindrückt.

Es ist jedoch insbesondere bei Sperrhebeln, die in einem Winkel von deutlich über 45 Grad zu dem Band stehen, auch möglich, das freie Ende des Sperrhebels stark zu verrunden, wobei die Sperrwirkung der Rücklaufsperre dann ausschließlich, bzw. nahezu ausschließlich, durch die Klemmwirkung zwischen dem Sperrhebel und dem Widerlager zustandekommt.

Hingegen wird eine bei spitzeren Winkeln erforderliche höhere Kerbwirkung dadurch erreicht, daß die Stirnfläche des Sperrhebels im wesentlichen rechtwinklig zu der Längserstreckung des Bandes liegt. Die höhere Kerbwirkung führt dazu, daß der Sperrhebel schon bei einer kurzen Zugbelastung des Bandes sicher auf das Band zu gedrückt wird und dadurch die Klemmwirkung zwischen dem Sperrhebel und dem Widerlager zustandekommt.

In der Zeichnung ist ein Ausführungsbeispiel der Erfindung dargestellt. Es zeigen:
Fig. 1 eine mit einer Antriebseinrichtung versehene lineare Führungseinrichtung mit insgesamt drei endseitig in Rücklaufsperren gehaltenen Abdeckbändern, in teilweise aufgebrochener Seitenansicht und in verkleinerter Darstellung,
Fig. 2 die Führungseinrichtung nach Fig. 1, geschnitten entlang der Linie II-II, in einem anderen Maßstab, und
Fig. 3 die Führungseinrichtung nach Fig. 1 in einer geschnittenen ausschnittsweisen und vergrößerten Darstellung.

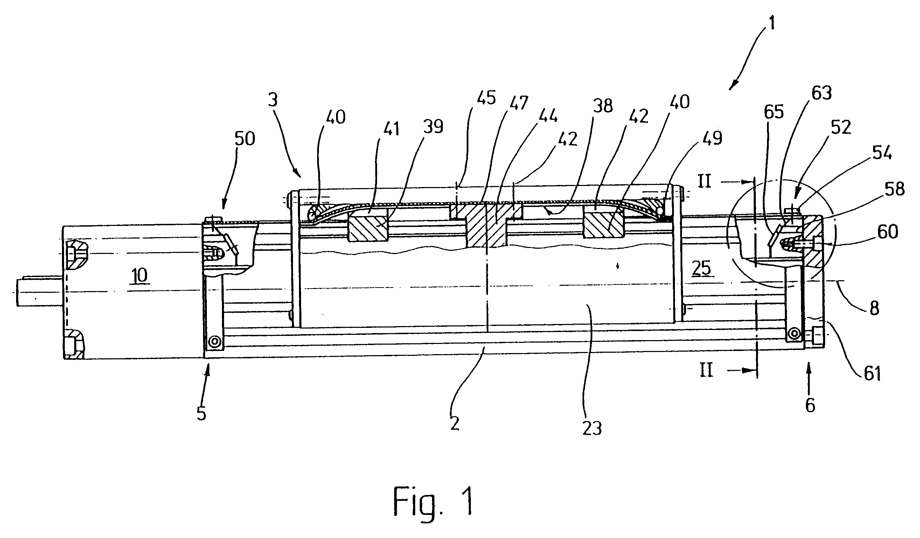

In Fig. 1 ist eine angetriebene Linearführung 1 dargestellt, bei der an einem länglich ausgebildeten Grundkörper 2 ein Schlitten 3 längs verfahrbar gelagert ist. Der in seiner äußeren Gestalt etwa quaderförmige Grundkörper 2 weist eine in Figur 1 links liegende Stirnseite 5, sowie eine rechtliegende Stirnseite 6 auf, die die jeweiligen Enden einer linearen, sich entlang einer Längsmittelachse 8 des Grundkörpers 2 erstreckenden Bahn des Schlittens 3 definieren. Der im Querschnitt u-förmig ausgebildete Schlitten 3 umfaßt den Grundkörper 2 dreiseitig und ist auf diesen spielarm längs verfahrbar, d.h. entlang der Längsmittelachse 8 verschiebbar gelagert, so daß der Schlitten 2 Querkräfte aufnehmen und auf den Grundkörper 2 übertragen kann.

Um den Schlitten 3 kraftbetätigt verfahren zu können, ist an der linksseitigen Stirnseite 5 eine Antriebseinrichtung 10 angeordnet, die über einen nicht weiter dargestellten Spindeltrieb, der eine sich längs durch den Grundkörper 2 erstreckende Spindel aufweist, mit dem Schlitten 3 zusammenwirkt.

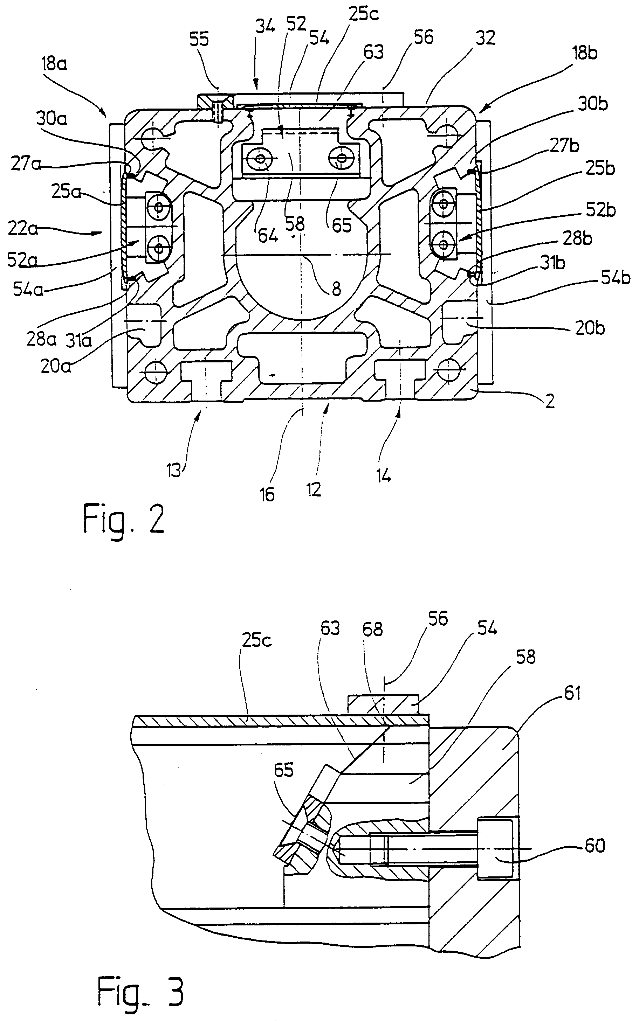

Der Grundkörper 2, der in Figur 2 leicht vergrößert und entlang der Linie II-II von Figur 1 geschnitten dargestellt ist, weist an seiner von dem Schlitten 3 nicht umfaßten Basisfläche 12 zwei parallel zueinander sowie parallel zu der Längsmittelachse 8 verlaufende T-Nuten 13, 14 auf, die der Befestigung der Linearführung 1 an entsprechenden Halterungen oder Maschinenteilen dienen. Der beispielsweise als Strangpreßprofil aus Aluminium hergestellte Grundkörper 2 ist symmetrisch zu einer die Längsmittelachse 8 enthaltenden und rechtwinklig zu der Grundfläche 12 ausgerichteten Symmetrieebene 16 ausgebildet. Es sei angemerkt, daß der Grundkörper 2 auch aus anderen geeigneten Materialien wie Stahl oder Kunststoff bestehen kann. Im folgenden wird deshalb lediglich wie in Figur 2 links dargestellte Hälfte des Grundkörpers beschrieben, wobei sich die Beschreibung gleichermaßen auf die rechts neben der Symmetrieebene 16 liegenden Abschnitte des Grundkörpers 2 bezieht. Für beide Abschnitte sind deshalb ohne weiteren Kommentar die gleichen Bezugszeichen verwendet worden, wobei zur Unterscheidung die linksseitigen Bezugszeichen mit einem a und die rechtsseitigen Bezugszeichen mit einem b gekennzeichnet worden sind.

Im rechten Winkel zu der Grundfläche 12, sowie im Abstand und parallel zu der Symmetrieebene 16 ist eine Seitenfläche 18 vorgesehen, die eine L-förmig ausgebildete und parallel zu der Längsmittelachse 8 verlaufende Längsnut 20 enthält. Außerdem ist parallel zu der Längsnut 20 sowie der Längsmittelachse 8 eine weitere Nut 22a vorgesehen, die von einem Schenkel 23 des Schlittens 3 übergriffen und mit einem Abdeckband 25 abgedeckt ist. Im Inneren der Nut 22 sind Lagerflächen angeordnet, an denen sich nicht weiter dargestellte, das Abdeckband 25 von der Nut 22 abhebende und umgreifende Lagerelemente abstützen, die mit dem Schenkel 23 des Schlittens 3 verbunden sind.

Das Abdeckband 25 ist ein im wesentlichen flaches, flexibles Kunststoffband, das an seiner in Fig. 2 unteren, sowie an seiner in Fig. 2 oberen Längskante Rastlippen 27, 28 aufweist, mit denen das Abdeckband 25 in entsprechende, in den Flanken der Nut 22 vorgesehene Längsvertiefungen 30, 31 greift.

Die Seitenflächen 18a, 18b sind durch eine in Fig. 2 obenliegende Deckfläche 32 des Grundkörpers 2 miteinander verbunden. Die Deckfläche 32 ist von einer längs verlaufenden und symmetrisch zu der Symmetrieebene 16 liegenden Nut 34 durchschnitten, die in einen von dem Grundkörper umschlossenen Innenraum 36 führt. Die Nut 34 ist, wie bereits in Verbindung mit den Nuten 22a, 22b beschrieben, von einem Abdeckband 25c abgedeckt, das mit den bereits beschriebenen Abdeckbändern 22a, 22b übereinstimmt. Teile der Nut 34, die mit Teilen der Nuten 22a, 22b übereinstimmen, und das Abdeckband 25c tragen insoweit die gleichen Bezugszeichen.

Das Abdeckband 25c ist, wie insbesondere aus Fig. 1 hervorgeht, durch einen an dem Schlitten 3 vorgesehenen Durchführungsbereich 38 geführt, in dem das Abdeckband 25c aus der Nut 34 herausgehoben ist. Das Abdeckband 25c ist dabei durch entsprechende, in Lagerstücken 39, 40 vorgesehenen Schlitzen 41, 42 geführt, wodurch die Lagerstücke 39, 40 das Abdeckband 25c gewissermaßen umgreifen und bei einer Längsbewegung des Schlittens aus der Nut 34 herausheben. Zwischen den Lagerstücken 39, 40 ist ein Kraftübertragungssteg 44 angeordnet, der mittels lediglich symbolisch angedeuteter Schrauben 45, 46 mit dem Schlitten 3 verschraubt ist und der der Kraftübertragung von einer in dem Innenraum des Grundkörpers 2 angeordneten Spindel auf den Schlitten 3 dient.

Um das Abdeckband 25c außerhalb des Schlittens 3 in der Nut 34 zu halten, sind bei beiden Stirnseiten des Schlittens 3 zwei Andruckrollen 48, 49 vorgesehen.

Das in der Nut 34 liegende und darin verrastete, sowie im Bereich des Schlittens 3 aus der Nut 34 herausgehobene und durch die Schlitze 41, 42 und 47 geführte Abdeckband 25c ist bei den Stirnseiten 5, 6 des Grundkörpers 3 in Haltevorrichtungen gehalten, die als Rücklaufsperren 50, 52 ausgebildet sind.

Beide Rücklaufsperren 50, 52 sind untereinander gleich ausgebildet und zueinander spiegelsymmetrisch angeordnet, so daß im folgenden lediglich die Rücklaufsperre 52 beschrieben wird. Die Rücklaufsperre 52 weist, wie aus Fig. 2 hervorgeht, eine als Widerlager für das Abdeckband 25c dienende Brücke 54 auf, die die Nut 34 überbrückt und die beidseits derselben mittels Schrauben 55, 56 an dem Grundkörper befestigt ist. An der der Brücke 54 gegenüberliegenden Seite des Abdeckbandes 25c ist in die Nut 34 ein Formstück 58 eingesetzt, das mittels Schrauben 60 an einem mit dem Grundkörper 2 verschraubten Abschlußdeckel 61 befestigt ist. An dem Formstück 58 ist endseitig eine Blattfeder 63 eingespannt und mittels zweier Schrauben 64, 65 befestigt.

Die Blattfeder 63 steht in einem spitzen Winkel von ungefähr 45 Grad zu dem Abdeckband 25c und liegt mit einer auf das Abdeckband 25c zu gerichteten Vorspannung an diesem an, wodurch das Abdeckband 25c an die Brücke 54 angedrückt wird. Das Abdeckband liegt dabei in dem etwa kreisbogenförmigen Schwenkbereich, der eine freistehende Zunge bildenden Blattfeder 63. Die Blattfeder 63 stützt das Abdeckband 25c etwa mittig in Bezug auf die Brücke 54. Vorzugsweise liegt die Blattfeder 63 an einer etwa um einen Millimeter gegen die von den Schrauben 55, 56 markierten Mitte der Brücke 54 in Richtung auf den Abschlußdeckel 61 zu versetzt. Das an dem Abdeckband 25c anliegende Ende der Blattfeder 63 weist eine relativ scharfe, sich in das Abdeckband 25c einkerbende Kante auf.

Die Kante 68 ist durch die Schnittlinie der Flachseite der Blattfeder 63 mit ihrer die Stirnseite definierenden Fläche gebildet. Im einfachsten Falle liegt die Stirnfläche dabei rechtwinklig zu der Flachseite der Blattfeder 63. Sie kann jedoch auch in einem spitzen Winkel zu dieser angeordnet sein, wodurch sie gegebenenfalls die Kerbwirkung der Blattfeder 63 erhöht.

Der Abschlußdeckel 61 ist in seinen Abmessungen derart festgelegt, daß das Abdeckband ungehindert über die Stirnseiten 5, 6 des Grundkörpers 2 hinausstehen kann, insbesondere ohne dabei an dem Abschlußdeckel 61 anzustoßen.

Die insoweit beschriebene Rücklaufsperre 52 ist an den Nuten 22a und 22b bei der Stirnseite 6 in entsprechender Form vorgesehen. In spiegelsymmetrischer Form, d.h. ebenfalls mit von dem Schlitten 3 weg geneigten Blattfedern 63, sind Haltevorrichtungen 50, 50a, 50b in den Nuten 22a und 22b angeordnet, um die Abdeckbänder 25a, 25b zu halten. Somit sind an der Linearführung 1 insgesamt sechs Rücklaufsperren als Halterungen für die Abdeckbänder 25a, 25b und 25c vorgesehen, wobei drei Rücklaufsperren 50, 50a, 50b an der linksseitigen Stirnseite 5 und drei Rücklaufsperren 52, 52a, 52b an der rechtsseitigen Stirnseite 6 vorgesehen sind.

Die insoweit beschriebene Linearführung arbeitet wie folgt:

Bei Betätigung der Antriebseinrichtung 10 wird eine in Richtung der Längsmittelachse 8 wirkende Kraft auf den Kraftübertragungssteg 44 ausgeübt, die den Schlitten 3 in der entsprechenden Richtung verschiebt. Dabei werden die Abdeckbänder 25a, 25b, 25c an der in Fahrtrichtung vorne liegenden Seite des Schlittens 3 aus den Nuten 22a, 22b, 34 herausgehoben, wobei der Schlitten 3 mit seinem von den Schlitzen 41, 42, 47 definierten Durchführungsbereich 38 auf dem Abdeckband 25c sowie auf den Abdeckbändern 25a, 25b entlanggleitet. Bei dem in Fahrtrichtung hinten liegenden Ende des Schlittens 3 werden die Abdeckbänder 25a, 25b, 25c wiederum in die Nuten 22a, 22b, 34 eingesetzt.

Durch die Reibung zwischen dem im Inneren des Schlittens 3 liegenden Abschnitt des Abdeckbandes 25c und den entsprechenden Teilen des Schlittens 3, insbesondere im Bereiche der Lagerstücke 39, 40 und des Kraftübertragungssteges 44, wird eine Axialkraft auf das Abdeckband 25c ausgeübt, die versucht, den in Fahrtrichtung hinter dem Schlitten 3 liegenden Abschnitt des Abdeckbandes 25c zu dehnen. Entsprechend wird eine Axialkraft in die Abdeckbänder 25a, 25c eingeleitet. Die Axialkraft kann zu einer elastischen Dehnung der Abdeckbänder 25 führen, wodurch der in Fahrtrichtung vor dem Schlitten liegende jeweilige Teil des betreffenden Abdeckbandes ein Stück weit in Fahrtrichtung des Schlittens 3 mitgenommen und dabei sozusagen vor dem Schlitten 3 hergeschoben wird. Das Abdeckband 25c kann dabei, wie aus Fig. 3 ersichtlich ist, bei einer Bewegung des Schlittens 3 nach rechts zwischen der Brücke 54 und der Blattfeder 63 über die Stirnseite 6 des Grundkörpers 2 hinausgeschoben werden. Dabei gleiten die Rastlippen 27c, 28c in den Längsvertiefungen 30c, 31c der Nut 34, ohne daß es zum Ausbilden einer Wulst durch das Abdeckband 25c kommen könnte. Das über die Stirnseite 6 hinausgeschobene Ende des Abdeckbandes 25c ist am Gleiten gehindert, denn die Blattfeder 63 kerbt sich, sobald das Abdeckband 25c zur Ruhe gekommen ist, in dieses ein und drückt es gegen die das Widerlager bildende Brücke 54. Die Eigenspannung des Abdeckbandes 25c zieht dabei die Rücklaufsperre 52 fest, wobei ein an dem Abdeckband 25c wirkender, in Fig. 3 nach links gerichteter Zug durch die Blattfeder 63 in eine auf das Widerlager 54 zu gerichtete Anpreßkraft umgewandelt wird.

In entsprechender Weise arbeiten die Rücklaufsperren 52a, 52b sowie die Rücklaufsperren 50, 50a, 50b. Wenn beispielsweise infolge von schnellen Verfahrgeschwindigkeiten, schneller Aufeinanderfolge von Arbeitshüben oder Verschmutzung der Abdeckbänder 25a, 25b, 25c die entstehende Reibungswärme vergrößert ist, und sich eines oder mehrere der Abdeckbänder in ihrer Länge ausdehnen, wird der entstehende Längenzuwachs von den Rücklaufsperren 50, 52 ausgeglichen, so daß die Abdeckbänder 25 in jedem Falle straff sitzen. Eine Linearbewegung des beweglichen, an dem jeweiligen Abdeckband 25 entlanggleitenden Elementes bewirkt eine ständige Straffung des Abdeckbandes 25. Ein Längenzuwachs durch Erwärmung, Alterung oder eine anderweitig verursachte plastische Verformung wird somit von den als Befestigungseinrichtungen dienenden Rücklaufsperren 50, 52 aufgenommen.

Die als Rücklaufsperren 50, 52 ausgebildeten Befestigungseinrichtungen können in einer entsprechenden Bauform auch zum Halten von Abdichtbändern vorgesehen werden, wie sie zum Abdichten des Längsschlitzes von fluidbetätigten Linearzylindern Anwendung finden. Gegebenenfalls sind dann bei den Blattfedern 63 zusätzlich Dichtungselemente vorgesehen, die den Linearzylinder nach außen abdichten und die dem Querschnitt des Abdichtbandes angepaßt sind.

## Patentansprüche

1. Führungseinrichtung (1) zur Führung eines beweglichen Elementes (3) entlang einer vorgegebenen, sich von einem ersten Ende (5) zu einem zweiten Ende (6) erstreckenden Bahn,
mit einem Grundkörper (2), der einen sich entlang der Bahn des beweglichen Elementes (3) erstreckenden Durchbruch (22) aufweist,
mit wenigstens einem sich von dem beweglichen Element (3) in den Durchbruch (22) erstreckenden Glied (39, 40, 44), das mit dem beweglichen Element (3) verbunden ist,
mit einem länglichen, den in dem Grundkörper (2) vorgesehenen Durchbruch (22) abdeckenden Band (25), das sich entlang des Durchbruches (22) erstreckt,
dadurch gekennzeichnet,
daß an wenigstens einem der beiden Enden (5, 6) der Bahn eine Rücklaufsperre (50, 52) angeordnet ist, mittels derer das Band (25) gehalten ist und die eine Verschiebung des Bandes (25) über das betreffende Ende (5, 6) der Bahn hinaus freigibt sowie ein Rücklaufen des Bandes (25) sperrt.

2. Führungseinrichtung nach Anspruch 1, dadurch gekennzeichnet, daß die Rücklaufsperre (50, 52) das Band (25) an dem Durchbruch (22) hält und damit zugleich als das Band (25) an dem Ende (5, 6) der Bahn haltende Befestigungseinrichtung ausgebildet ist.

3. Führungseinrichtung nach Anspruch 1, dadurch gekennzeichnet, daß sowohl an dem ersten Ende (5) als auch an dem zweiten Ende (6) der Bahn eine Rücklaufsperre (50, 52) vorgesehen ist.

4. Führungseinrichtung nach Anspruch 1, dadurch gekennzeichnet, daß die Rücklaufsperre (50, 52) wirkungsmäßig zwischen dem Grundkörper (2) und dem Band (25) angeordnet ist.

5. Führungseinrichtung nach Anspruch 1, dadurch gekennzeichnet, daß die Rücklaufsperre (50, 52) im wesentlichen spielfrei ausgebildet ist.

6. Führungseinrichtung nach Anspruch 1, dadurch gekennzeichnet, daß die Rücklaufsperre (50, 52) schritt- und stufenlos ausgebildet ist.

7. Führungseinrichtung nach Anspruch 1, dadurch gekennzeichnet, daß die Rücklaufsperre (50, 52) wenigstens ein von dem Band (25) betätigtes Sperrmittel (63) enthält, das bei einer von der Rücklaufsperre (50, 52) auf das bewegliche Element (3) zu gerichteten Zugbelastung des Bandes (25) in eine Sperrstellung, bei der das Abdeckband (25) blockiert ist, und bei einer von dem beweglichen Element (3) auf die Rücklaufsperre (50, 52) zu gerichteten Schubbeanspruchung des Bandes (25) in eine Verschiebung des Bandes (25) zulassende Freigabestellung überführt wird.

8. Führungseinrichtung nach Anspruch 7, dadurch gekennzeichnet, daß das Sperrmittel (63) wenigstens ein in Bezug auf das Band (25) schwenkbar gelagerter Sperrhebel ist, dessen freies Ende (68) federnd an dem Band (25) anliegt und der mit der Längserstreckung des Bandes (25) einen zu dem beweglichen Element (3) hin geöffneten spitzen Winkel einschließt.

9. Führungseinrichtung nach Anspruch 7, dadurch gekennzeichnet, daß ein bezüglich des Grundkörpers (2) ortsfest angeordnetes Widerlager (54) vorgesehen ist, an dem das Band (25) anliegt und gegen das es mittels des Sperrmittels (63) angedrückt ist.

10. Führungseinrichtung nach Anspruch 8, dadurch gekennzeichnet, daß der Sperrhebel wenigstens eine einenends bezüglich des Grundkörpers ortsfest gehaltene Blattfeder (63) ist, deren freies Ende mit Vorspannung federnd an dem Band (25) anliegt.

11. Führungseinrichtung nach Anspruch 10, dadurch gekennzeichnet, daß die Blattfeder (63) mit der Längserstreckung des Bandes (25) einen zu dem beweglichen Element (3) hin geöffneten spitzen Winkel einschließt.

12. Führungseinrichtung nach den Ansprüchen 8 oder 11, dadurch gekennzeichnet, daß der spitze Winkel 45° beträgt.

13. Führungseinrichtung nach Anspruch 7, dadurch gekennzeichnet, daß das Sperrmittel (63) eine quer zu der Längserstreckung des Bandes (25) gerichtete Kante (68) aufweist, die wenigstens abschnittsweise an dem Band (25) anliegt.

14. Führungseinrichtung nach Anspruch 13, dadurch gekennzeichnet, daß die Kante (68)eine geringe Verrundung aufweist, so daß sich das Sperrmittel (63) bereits ohne Längsbelastung des Bandes (25) infolge der federnden Vorspannung des Sperrmittels (63) in das Band (25) einkerbt.

15. Führungseinrichtung nach Anspruch 13, dadurch gekennzeichnet, daß die Kante (68) die Schnittlinie einer im spitzen Winkel zu der Längserstreckung des Bandes (25) angeordneten Flachseite des Sperrmittels (63) und einer an dem Sperrmittel (63) vorgesehenen Stirnseite gebildet ist.

16. Führungseinrichtung nach Anspruch 15, dadurch gekennzeichnet, daß die Stirnseite des Sperrmittels (63) im wesentlichen rechtwinklig zu der Längserstreckung des Bandes (25) angeordnet ist.

17. Führungseinrichtung nach Anspruch 1, dadurch gekennzeichnet, daß das Band ein Abdeckband (25) ist, das den Durchbruch (22) bei dem sich durch den Durchbruch (22) erstreckenden Glied (39, 40, 44) freigibt sowie ansonsten abdeckt.

18. Führungseinrichtung nach Anspruch 1, dadurch gekennzeichnet, daß das Band ein Abdichtband ist, das den Durchbruch (22) bei dem sich durch den Durchbruch (22) erstreckenden Glied (39, 40, 44) freigibt sowie ansonsten abdeckt.

## Claims

1. Guide system (1) for guiding a movable element (3) along a predetermined path extending from a first end (5) to a second end (6),
with a base body (2), which has a passage (22) extending along the path of the movable element (3),
with at least one member (39, 40, 44) extending from the movable element (3) into the passage (22) and connected to the movable element (3),
with an elongated tape (25) covering the passage (22) provided in the base body (2) and extending along the passage (22),
characterised in that
a reverse-motion lock (50, 52) is arranged on at least one of the two ends (5, 6) of the path, said lock holding the tape (25) and enabling the tape (25) to shift beyond the respective end (5, 6) of the tape and blocking reverse motion of the tape (25).

2. Guide system according to Claim 1, characterised in that the reverse-motion lock (50, 52) holds the tape (25) against the passage (22) and thus is at the same time constructed as an attachment means holding the tape (25) at the end (5, 6) of the path.

3. Guide system according to Claim 1, characterised in that a reverse-motion lock (50, 52) is provided both at the first end (5) and at the second end (6) of the path.

4. Guide system according to Claim 1, characterised in that the reverse-motion lock (50, 52) is arranged to be effective between the base body (2) and the tape (25).

5. Guide system according to Claim 1, characterised in that the reverse-motion lock (50, 52) is constructed to be essentially without play.

6. Guide system according to Claim 1, characterised in that the reverse-motion lock (50, 52) is constructed to be stepless and continuously adjustable.

7. Guide system according to Claim 1, characterised in that the reverse-motion lock (50, 52) comprises at least one locking element (63), which is operated by the tape (25) and which, upon application of tension to the tape (25) in the direction of the movable element (3) by the reverse-motion lock (50, 52), is moved into a locked position, in which the covering tape (25) is locked in position, and upon application of shear to the tape (25) in the direction of the reverse-motion lock (50, 52) by the movable element (3), is moved into a release position permitting displacement of the tape (25).

8. Guide system according to Claim 7, characterised in that the locking element (63) is at least one locking lever disposed to swivel in relation to the tape (25), the free end (68) of said lever engaging resiliently against the tape (25) and said lever enclosing an acute angle with the longitudinal extension of the tape (25) open towards the movable element (3).

9. Guide system according to Claim 7, characterised in that a stop element (54) fixed in relation to the base body (2) is provided against which the tape (25) engages and against which it is pressed by means of the locking element (63).

10. Guide system according to Claim 8, characterised in that the locking lever is at least a leaf spring (63), which is fixedly held at one end in relation to the base body, its free end engaging resiliently against the tape (25) with bias force.

11. Guide system according to Claim 10, characterised in that the leaf spring (63) encloses an acute angle with the longitudinal extension of the tape (25) open towards the movable element (3).

12. Guide system according to Claim 8 or 11, characterised in that the acute angle amounts to 45°.

13. Guide system according to Claim 7, characterised in that the locking element (63) has an edge (68) directed transversely to the longitudinal extension of the tape (25) and engaging at least in sections against the tape (25).

14. Guide system according to Claim 13, characterised in that the edge (68) has a slightly rounded shape, so that the locking means (63) engages into the tape (25) as a result of the resilient bias of the locking means (63) even without any longitudinal load being applied to the tape (25).

15. Guide system according to Claim 13, characterised in that the edge (68) is formed by the intersection line of a flat side of the locking means (63) arranged at an acute angle to the longitudinal extension of the tape (25) and a front side provided on the locking means (63).

16. Guide system according to Claim 15, characterised in that the front side of the locking means (63) is arranged essentially at right angles to the longitudinal extension of the tape (25).

17. Guide system according to Claim 1, characterised in that the tape is a covering tape (25), which leaves the passage (22) open where the member (39, 40, 44) extends through the passage (22) and otherwise covers said passage.

18. Guide system according to Claim 1, characterised in that the tape is a sealing tape, which leaves the passage (22) open where the member (39, 40, 44) extends through the passage (22) and otherwise covers said passage.

## Revendications

1. Dispositif de guidage (1) pour le guidage d'un élément mobile (3) le long d'un chemin de déplacement prédéterminé s'étendant depuis une première extrémité (5)jusqu'à une seconde extrémité (6), comprenant un corps de base (2) pourvu d'une ouverture de passage (22) qui s'étend le long du chemin de déplacement de l'élément mobile (3),
au moins un organe (39, 40, 44) qui s'étend dans l'ouverture de passage (22), à partir de l'élément mobile (3), et est lié audit élément mobile (3),
une bande (25) allongée qui couvre l'ouverture de passage (22) ménagée dans le corps de base (2) et s'étend le long de ladite ouverture de passage (22),
caractérisé par le fait
qu'un système de cliquet de retour (50, 52), par lequel la bande (25) est tenue et qui autorise un coulissement de la bande (25) au delà de l'extrémité (5, 6) concernée du chemin de déplacement mais empêche un retour de la bande (25), est disposé à au moins une des deux extrémités (5, 6) du chemin de déplacement.

2. Dispositif de guidage selon la revendication 1, caractérisé par le fait que le système de cliquet de retour (50, 52) tient la bande (25) sur l'ouverture de passage (22) et de ce fait est agencé simultanément en dispositif de fixation tenant la bande (25) à l'extrémité de (5, 6) du chemin de déplacement.

3. Dispositif de guidage selon la revendication 1, caractérisé par le fait qu'un système de cliquet de retour (50, 52) est prévu tant à la première extrémité (5) qu'à la seconde extrémité (6) du chemin de déplacement.

4. Dispositif de guidage selon la revendication 1, caractérisé par le fait que le système de cliquet de retour (50, 52) du point de vue de l'action est disposé entre le corps de base (2) et la bande (25).

5. Dispositif de guidage selon la revendication 1, caractérisé par le fait que le système de cliquet de retour (50, 52) est essentiellement sans jeu.

6. Dispositif de guidage selon la revendication 1, caractérisé par le fait que le système de cliquet de retour (50, 52) est du type sans paliers et sans à-coups.

7. Dispositif de guidage selon la revendication 1, caractérisé par le fait que le système de cliquet de retour (50, 52) comprend au moins un moyen de blocage (63) actionné par la bande (25) qui, en présence d'une traction exercée sur la bande, du système de cliquet de retour (50, 52) en direction de l'élément mobile (3), est amené dans une position de blocage dans laquelle la bande de couverture (25) est bloquée et en présence d'une traction exercée sur la bande (25), de l'élément mobile (3) en direction du système de cliquet de retour (50, 52), est amené dans une position déverrouillée autorisant le coulissement de la bande (25).

8. Dispositif de guidage selon la revendication 7, caractérisé par le fait que le moyen de blocage (63) est au moins un levier de blocage qui est monté pivotant par rapport à la bande (25) et dont l'extrémité libre (68) appuie élastiquement sur la bande (25) et qui forme avec la direction longitudinale de la bande (25) un angle aigu ouvert en direction de l'élément mobile (3).

9. Dispositif de guidage selon la revendication 7, caractérisé par le fait qu'il est prévu un contre-appui (54) stationnaire par rapport au corps de base (2) sur lequel la bande (25) repose et contre lequel ladite bande est pressée par le moyen de blocage (63).

10. Dispositif de guidage selon la revendication 8, caractérisé par le fait que le levier de blocage est au moins un ressort à lame (63) qui est fixé de manière stationnaire par rapport au corps de base à une extrémité et dont l'extrémité libre est appliquée élastiquement avec pré-contrainte sur la bande (25).

11. Dispositif de guidage selon la revendication 10, caractérisé par le fait que le ressort à lame (63) forme, avec la direction longitudinale de la bande (25), un angle aigu ouvert en direction de l'élément mobile (3).

12. Dispositif de guidage selon la revendication 8 ou 11, caractérisé par le fait que l'angle aigu est de 45°.

13. Dispositif de guidage selon la revendication 7, caractérisé par le fait que le moyen de blocage (63) comporte une arête (68) orientée transversalement à la direction longitudinale de la bande (25) qui est en contact au moins par endroits avec la bande (25).

14. Dispositif de guidage selon la revendication 13, caractérisé par le fait que l'arête (68) présente un faible arrondi de telle sorte que le moyen de blocage (63), même en l'absence de sollicitation longitudinale de la bande (25), morde dans la bande (25) par suite de la précontrainte élastique du moyen de blocage (63).

15. Dispositif de guidage selon la revendication 13, caractérisé par le fait que l'arête (68) est formée par la ligne d'intersection entre une face plate du moyen de blocage (63) disposée suivant un angle aigu par rapport à la direction longitudinale de la bande (25) et une face frontale prévue sur le moyen de blocage (63).

16. Dispositif de guidage selon la revendication 15, caractérisé par le fait que la face frontale du moyen de blocage (63) est disposée essentiellement à angle droit par rapport à la direction longitudinale de la bande (25).

17. Dispositif de guidage selon la revendication 1, caractérisé par le fait que la bande est une bande de couverture (25) qui libère l'ouverture de passage (22) à l'endroit oil l'organe (39, 40, 44) s'étend à travers ladite ouverture de passage (22) et ferme celle-ci ailleurs.

18. Dispositif de guidage selon la revendication 1, caractérisé par le fait que la bande est une bande d'étanchéité (25) qui libère l'ouverture de passage (22) à l'endroit oil l'organe (39, 40, 44) s'étend à travers ladite ouverture de passage (22) et ferme celle-ci ailleurs.
